# EUROPEAN PATENT APPLICATION

(11) **EP 4 093 032 A1**
(43) Date of publication of application: **23.11.2022**
(21) Application number: 22165407.2
(22) Date of filing: 30.03.2022
(51) Int. Cl.: H04N 21/2187, H04N 21/431, H04N 21/472, H04N 21/475, H04N 21/478, H04N 21/485, H04N 21/81

(54) **METHOD AND APPARATUS FOR DISPLAYING DATA**

(30) Priority: 18.05.2021 CN 202110541065
(71) Applicant: Beijing Dajia Internet Information Technology Co., Ltd., Beijing 100085 (CN)
(72) Inventor: WU, Kaiyuan, Beijing (CN); ZENG, Menglei, Beijing (CN)
(74) Representative: Yang, Shu

(57) **Abstract**

A method and apparatus for displaying data are provided, belonging to the field of Internet technologies. The method includes: displaying (201; 305) a resource interface on an interface displaying a collection entrance of a data resource in response to a trigger operation performed on the collection entrance; and displaying (202; 307) a target data resource in a target state on the resource interface, the target data resource being the collected data resource.

## Description

### TECHNICAL FIELD

The present disclosure relates to the field of Internet technologies, and in particular relates to a method and apparatus for displaying data.

### BACKGROUND

With development of live-streaming and e-commerce, integration of streaming and e-commerce is becoming more intense. An anchor introduces articles in a live-streaming room, and the audience can watch the live-streaming and buy the articles sold in the live-streaming room.

### SUMMARY

The present disclosure provides a method and apparatus for displaying data. The technical solutions of the present disclosure are as follows.

According to an aspect of embodiments of the present disclosure, there is provided a method for displaying data. The method includes:
displaying a resource interface on an interface displaying a collection entrance of a data resource in response to a trigger operation performed on the collection entrance; and
displaying a target data resource in a target state on the resource interface, the target data resource being the collected data resource.

In some embodiments, displaying the resource interface on the interface displaying the collection entrance in response to the trigger operation performed on the collection entrance includes: displaying the resource interface on a list interface displaying the collection entrance in response to the trigger operation performed on the collection entrance, the list interface including at least one object.

In some embodiments, the collection entrance is a control displayed on the interface; and displaying the resource interface in response to the trigger operation performed on the collection entrance includes: displaying the resource interface in response to a trigger operation performed on the control.

In some embodiments, the method further includes displaying the collection entrance in response to at least one of: an access operation performed on a multimedia interface; the access operation performed on the multimedia interface, and staying on the multimedia interface for a first time duration; and an access operation performed on the multimedia interface during a target time period.

In some embodiments, the method further includes: displaying the collection entrance in a form of an animation.

In some embodiments, the method further includes: displaying a data resource corresponding to an account logged on by a terminal in the case that the terminal is in a log-on state.

In some embodiments, the method further includes stopping displaying the collection entrance in response to at least one of: that a display time duration of the collection entrance exceeds a second time duration; that the data resource is collected; and a closing operation of the collection entrance.

According to an aspect of embodiments of the present disclosure, there is provided an apparatus for displaying data, the apparatus includes: an interface displaying unit configured to display a resource interface on an interface displaying a preset resource entrance in response to a trigger operation performed on the preset resource entrance; and a resource displaying unit configured to display a target data resource in a target state on the resource interface, the target data resource being acquired data resource.

According to an aspect of embodiments of the present disclosure, there is provided a non-transitory computer-readable storage medium including program codes. When the program codes in the computer-readable storage medium are executed by a processor of a computer device, the computer device is enabled to perform a method including: displaying a resource interface on an interface displaying a collection entrance of a data resource in response to a trigger operation performed on the collection entrance; and displaying a target data resource in a target state on the resource interface, the target data resource being the collected data resource.

### BRIEF DESCRIPTION OF THE DRAWINGS

FIG. 1 is schematic diagram of an implementation environment of a method for displaying data according to an exemplary embodiment;
FIG. 2 is a flow chart of a method for displaying data according to an exemplary embodiment;
FIG. 3 is a flow chart of a method for displaying data according to an exemplary embodiment;
FIG. 4 is a schematic diagram of a collection entrance of a data resource according to an exemplary embodiment;
FIG. 5 is a schematic diagram of a list interface according to an exemplary embodiment;
FIG. 6 is a schematic diagram of a resource interface according to an exemplary embodiment;
FIG. 7 is a schematic diagram of a resource interface according to an exemplary embodiment;
FIG. 8 is a schematic diagram of a resource interface according to an exemplary embodiment;
FIG. 9 is a schematic diagram of a resource introduction interface according to an exemplary embodiment;
FIG. 10 is a schematic diagram of a resource detail interface according to an exemplary embodiment;
FIG. 11 is a schematic diagram of a resource interface according to an exemplary embodiment;
FIG. 12 is a block diagram of an apparatus for displaying data according to an exemplary embodiment;
FIG. 13 is a block diagram of a terminal according to an exemplary embodiment; and
FIG. 14 is a block diagram of a server according to an exemplary embodiment.

### DETAILED DESCRIPTION

Data or information involved in the present disclosure is data or information authorized by a user or fully authorized by all parties.

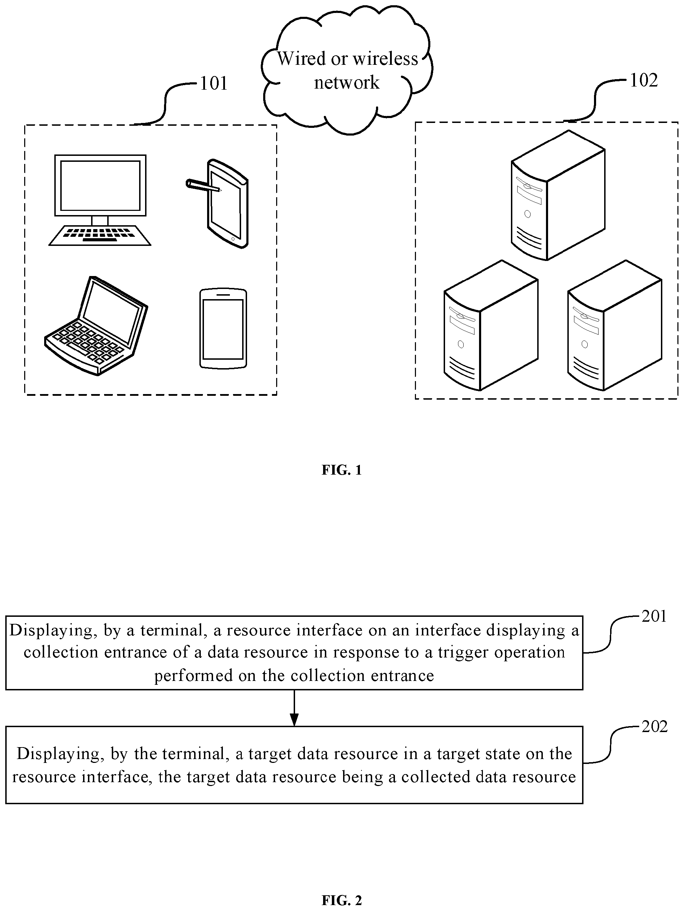

FIG. 1 is schematic diagram of an implementation environment of a method for displaying data according to an embodiment of the present disclosure. Referring to FIG. 1, the implementation environment includes a terminal 101 and a server 102.

The terminal 101 is at least one of a smart phone, a smart watch, a desktop computer, a laptop computer, a virtual reality terminal, an augmented reality terminal, a wireless terminal, and a laptop portable computer. The terminal 101 has a communication function and is capable of accessing a wired network or a wireless network. In some embodiments, the terminal 101 generally refers to one of multiple terminals, and the present embodiment takes the terminal 101 only as an example for illustration. Those skilled in the art can know that the number of the aforementioned terminals can be more or less.

In embodiments of the present disclosure, the terminal 101 refers to a terminal corresponding to any one of audience accounts in a live-streaming room. In some embodiments, the terminal 101 can run a live-streaming application, through which a user can watch a live-streaming room of an anchor at any time and purchase items in the live-streaming room. In embodiments of the present disclosure, the terminal 101 is configured to display a resource interface on an interface displaying a collection entrance of a data resource in response to a trigger operation performed on the collection entrance, and display a collected data resource in a target state on the resource interface.

The server 102 is an independent physical server. In some embodiments, the server 102 is a server cluster or a distributed file system composed of multiple physical servers. In other embodiments, the server 102 is a cloud server for providing cloud services, cloud databases, cloud computing, cloud functions, cloud storage, network services, cloud communications, middleware services, domain name services, security services, a Content Delivery Network (CDN), and basic cloud computing services such as big data and artificial intelligence platforms. The server 102 and the terminal 101 are directly or indirectly connected through wired or wireless communication, which is not limited in embodiments of the present disclosure. In some embodiments, the number of the aforementioned servers 102 can be more or less, which is not limited in embodiments of the present disclosure. Of course, In some embodiments, the server 102 also includes other functional servers to provide more comprehensive and diversified services.

In embodiments of the present disclosure, the server 102 can be a background server of a live-streaming application. In some embodiments, the server 102 is configured to send a live-streaming data stream of the anchor to the terminal 101, so as to trigger the terminal 101 to display a screen of the live-streaming of the anchor.

FIG. 2 is a flow chart of a method for displaying data according to an exemplary embodiment. As shown in FIG. 2, the method is executed by an electronic device which is a terminal shown in FIG. 1. Schematically, the method includes the following steps.

In 201, the terminal displays a resource interface on an interface displaying a collection entrance of a data resource in response to a trigger operation performed on the collection entrance.

In 202, the terminal displays a target data resource in a target state on the resource interface, the target data resource being the collected data resource.

The technical solutions according to the embodiments can improve the human-machine interaction efficiency and attract user to interact based on the interfaces, thereby improving the user conversion rate.

In some embodiments, displaying the resource interface on the interface displaying the collection entrance in response to the trigger operation performed on the collection entrance includes:
displaying the resource interface on a list interface displaying the collection entrance in response to the trigger operation performed on the collection entrance, the list interface including at least one object.

In some embodiments, the collection entrance is a control displayed on the interface; and
displaying the resource interface in response to the trigger operation performed on the collection entrance includes:
displaying the resource interface in response to a trigger operation performed on the control.

In some embodiments, the collection entrance is displayed in at least one of the following conditions:
in response to an access operation performed on a multimedia interface;
in response to the access operation performed on the multimedia interface, and in response to staying on the multimedia interface for a first time duration; and
in response to an access operation performed on the multimedia interface during a target time period.

In some embodiments, the method further includes:
displaying the collection entrance in the form of an animation.

In some embodiments, before displaying the target data resource in the target state on the resource interface, the method further includes:
displaying a data resource corresponding to an account logged on by a terminal in the case that the terminal is in a log-on state.

In some embodiments, the method further includes stopping displaying the collection entrance in response to at least one of: that a display time duration of the collection entrance exceeds a second time duration; that the data resource is collected; and, a closing operation of the collection entrance.

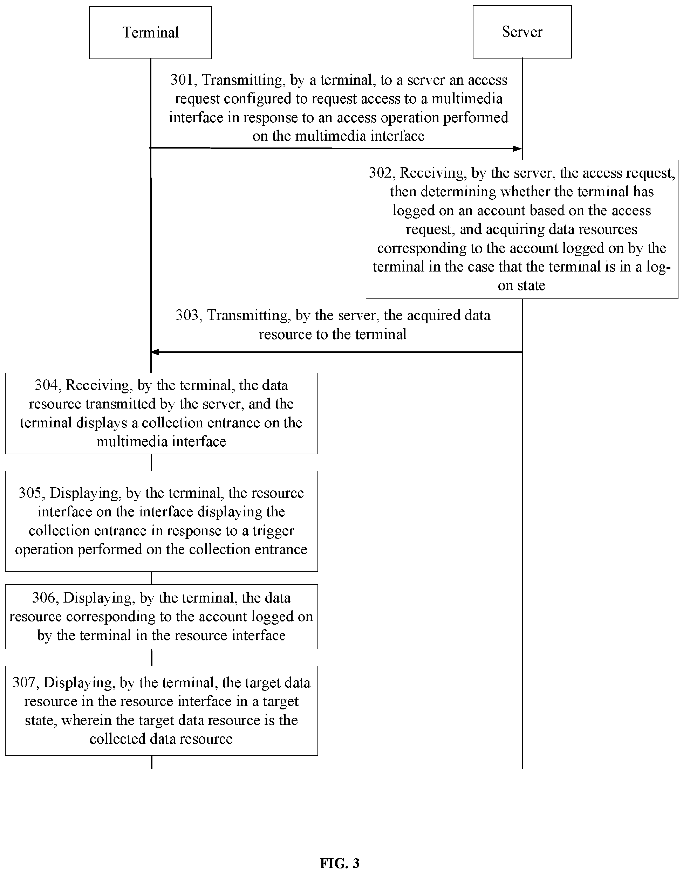

The above-described flow shown in FIG. 2 is merely a basic flow of the present disclosure. Solutions according to the present disclosure are further illustrated below based on a specific embodiment. FIG. 3 is a flow chart of a method for displaying data according to an exemplary embodiment. Referring to FIG. 3, the method, performed by an electronic device which is a terminal shown in FIG. 1, includes the following steps.

In 301, an access request configured to request access to a multimedia interface is transmitted by a terminal to a server in response to an access operation performed on the multimedia interface.

In some embodiments, the multimedia interface is any one of a live-streaming interface, a display interface of a video work, and a list interface. In some embodiments, the live-streaming interface is an interface where a live-streaming is taking place, or an interface of live-streaming playback. In some embodiments, the video work is a short video work posted by a user in a live-streaming application. Accordingly, the display interface of the video work can be a short video playback interface. In some embodiments, the list interface refers to an item list page, and the list interface includes at least one object, which is an item object, such as a product.

In 302, the access request is received by the server, then the server determines whether the terminal has logged on an account based on the access request, and acquires data resources corresponding to the account logged on by the terminal in the case that the terminal is in a log-on state.

In the embodiments of the present disclosure, the multimedia interface provides multiple data resources. In some embodiments, taking that the multimedia interface is a live-streaming interface as an example, the data resource is configured to provide rights and/or benefits that can be used for trading based on item objects in the live-streaming room. In some embodiments, the data resource includes at least one of quality assurance rights, return assurance rights, refund assurance rights, shipping assurance rights, and freight assurance rights. For example, quality assurance rights are rights of compensating with ten authentic pieces of goods for one counterfeit piece of goods, or warehouse inspection/distribution rights, and so on; the return assurance rights are rights of returning goods within 7 days without reason; the refund assurance rights are rights of refunding without returning, fast refund rights, and so on; the shipping assurance rights are fast shipping rights; and the freight assurance are rights of returning goods free of freight. In some embodiments, the multimedia interface is a live-streaming interface as an example, and the data resource is further configured to provide rights and benefits that can be used based on interaction in the live-streaming room. In some embodiments, the data resource also includes interactive rights and benefits. For example, rights to participate in activities, rights to connect with the anchor, rights to comment, etc. In some embodiments, the data resource is in the form of a "trust card".

In some embodiments, the server receives the access request and acquires an account carried in the access request. For each account, different data resources or the same data resource can be provided, which is not limited in the embodiments of the present disclosure. In some embodiments, the server also provides different data resources based on historical behavior records corresponding to the account. For example, if the account often involves in return and exchange behaviors, the account is provided with data resources for rights of return and exchange. Then, step 303 is executed. In this way, in the case that the account accesses the multimedia interface, the server provides a display of a collection entrance of a data resource, so that the user can perform a subsequent process of collecting data resources based on the collection entrance.

In some embodiments, before implementing the present embodiment, the server can generate the correspondence between historical behaviors and data resources based on historical behavior records of multiple accounts, and then query based on the correspondence in the case that an access request is received, which greatly reduces processing contents of the server and improves processing efficiency of the server.

In 303, the collected data resource is transmitted by the server to the terminal.

In 304, the data resource transmitted by the server is received by the terminal, and the latter displays a collection entrance of a data resource on the multimedia interface.

In embodiments of the present disclosure, the collection entrance is a collecting entrance of the data resource. In some embodiments, the collection entrance is a control displayed on the interface. By displaying a collection entrance of a data resource in the form of a control, it is convenient for users to implement trigger operations, thereby improving the human-machine interaction efficiency.

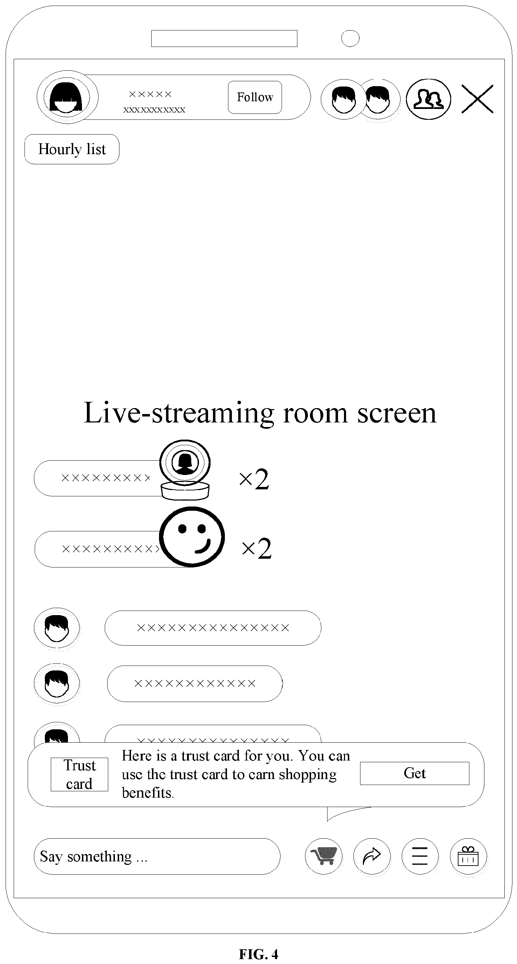

In some embodiments, the multimedia interface is a live-streaming interface as an example, and the terminal displays the collection entrance on the live-streaming interface. For example, FIG. 4 is a schematic diagram of a collection entrance of a data resource according to an exemplary embodiment of the present disclosure. Referring to FIG. 4, the multimedia interface is a live-streaming interface and the data resource is a trust card as an example, and the collection entrance can be a "Get" control as shown in FIG. 4. By displaying the collection entrance on the live-streaming interface, the user can collect data resources provided by the live-streaming room by triggering the collection entrance; the data resource is configured so that the user can use the data resource when trading based on item objects in the live-streaming room, which can facilitate subsequent trading processes based on the item objects performed by the user, thereby greatly reducing a cost and time for user purchase decisions, and attracting more users to purchase items in the live-streaming room.

In some embodiments, the terminal displays the collection entrance in the form of an animation. In some embodiments, the terminal displays the collection entrance in the form of a bubble prompt. In this way, displaying the collection entrance in the form of bubbles can attract the user's attention to the collection entrance, thereby guiding the user to collect the card. It should be understood that at this time, the data resource is in a state of being uncollected and collectable.

Referring to FIG. 4, the multimedia interface is the live-streaming interface and the data resource is the trust card as an example, the terminal displays a bubble pop-up window in the live-streaming room, and the collection entrance of the trust card is displayed in the bubble pop-up window. In some embodiments, the terminal displays an icon of the data resource in the bubble pop-up window. In some embodiments, the terminal displays resource prompt information in the bubble pop-up window, and the resource prompt information is configured to prompt the user to trigger a collection entrance of a data resource and collect data resources. For example, content of the resource prompt information is "Here is a trust card for you. You can use the trust card to earn shopping benefits.".

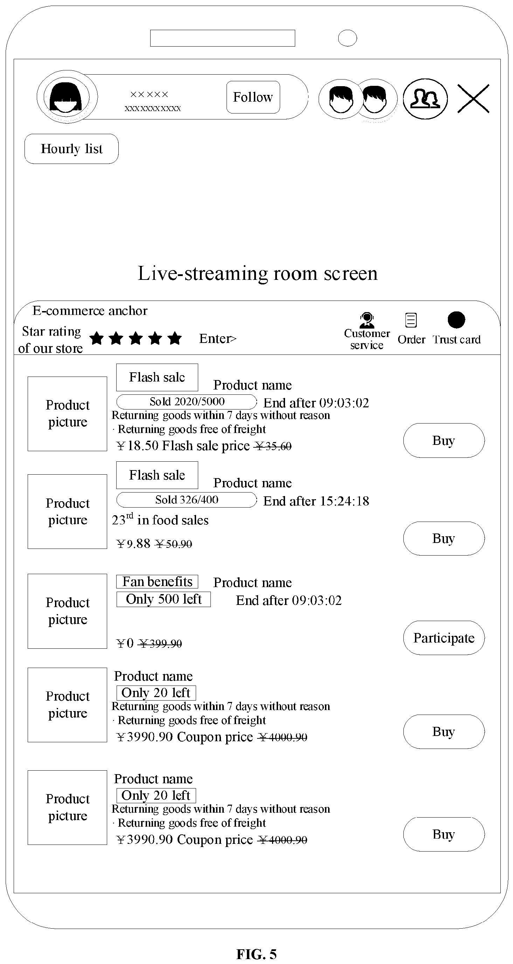

In other embodiments, the multimedia interface is a list interface as an example, and the terminal displays the collection entrance on the list interface. For example, FIG. 5 is a schematic diagram of a list interface according to an exemplary embodiment. Referring to FIG. 5, the multimedia interface is the list interface and the data resource is the trust card as an example, and the list interface can be a product list interface as shown in FIG. 5. Referring to FIG. 5, the collection entrance can be a "trust card" control shown in FIG. 5. By configuring the collection entrance in the list interface, the user can acquire the data resource in the resource interface by triggering the collection entrance, which improves the human-computer interaction efficiency, and further allows the user to view the list interface while viewing the resource interface meanwhile, thereby promoting the user's subsequent ordering process, and attracting more users to purchase items in the live-streaming room.

In some embodiments, the terminal displays the collection entrance in a highlighted form. In some embodiments, in the case that uncollected data resources of the account are present, the terminal displays the collection entrance in the list interface in the form of jitter display. In this way, the user is guided to collect data resources by the collection entrance in the highlighted form.

Referring to FIG. 5, the terminal displays the collection entrance in a highlighted form. In some embodiments, the terminal displays at least one product and associated information thereof in the product list interface. For example, the associated information of the product is a product picture, a product name, a product price, trading rights for the product, and so on.

It should be noted that the above steps 301 to 304 are processes of displaying the collection entrance in the live-streaming room when the terminal has logged on the account. In some other embodiments, the server further needs to determine whether the live-streaming room is a target live-streaming room, and whether the target live-streaming room is a live-streaming room that is allowed to issue the data resource. Furthermore, in the case that the live-streaming room is the target live-streaming room, the terminal displays the collection entrance in the live-streaming room. In some embodiments, the server makes the determination on the live-streaming room at the start time of the live-streaming room, or at the moment when the terminal has logged on the account to enter the live-streaming room. In this embodiment, by determining the live-streaming room, it is ensured that displaying of the collection entrance is performed in a live-streaming room which can provide the data resource, so as to ensure that the displayed preset resource entrance is available.

It should be noted that the above steps 301 to 304 are processes of displaying the collection entrance in the case that the terminal accesses the multimedia interface. by displaying the collection entrance upon an access operation, the user is guided to trigger the collection entrance to collect data resources. At the same time, by displaying the collection entrance upon an access operation, the user can be attracted to stay on the multimedia interface, so as to effectively increase the user conversion rate.

In some other embodiments, the terminal can also display the collection entrance based on other trigger logic: in some embodiments, in response to the access operation performed on the multimedia interface, and in response to staying on the multimedia interface for a first time duration, the terminal displays the collection entrance on the multimedia interface. The first time duration is a preset fixed time duration, such as 5s, and said staying for a first duration refers to a duration of staying on the multimedia interface is greater than or equal to the first duration. In this way, the collection entrance will be displayed 5s after entering the live-streaming room. At this time, the user can be interested in contents displayed on the multimedia interface, and displaying the collection entrance at this time can increase the possibility of clicking by the user for collecting and can avoid a case that the user is disturbed by a collection entrance of a data resource displayed at the start of the user's access, thereby improving the user's experience. In other embodiments, the terminal displays the collection entrance on the multimedia interface in response to an access operation performed on the multimedia interface during a target time period. The target time period can be a predetermined fixed time period, such as a time period between 18:00 and 20:00. In this way, when the collection entrance is triggered to be displayed upon an access operation performed on the multimedia interface during a preset time period, for example, when the collection entrance is displayed during a peak of live-streaming, the possibility of clicking by the user for collecting can be increased and a case that the user is disturbed by a collection entrance of a data resource displayed during a non-preset time period can be avoided, thereby improving the user's experience.

In some other embodiments, the terminal can also determine whether the account logged on by the terminal accesses the live-streaming room for the first time. Furthermore, in the case that the account accesses the live-streaming room for the first time in a day, the terminal displays the collection entrance on the multimedia interface. In this way, in the case that a user accesses the multimedia interface for the first time every day, the collection entrance is displayed so as to ensure that the collection entrance is only displayed to one user once a day, and to avoid a case that the user is disturbed due to multiple display of the collection entrance, which affects the user's experience.

In 305, the resource interface is displayed by the terminal on the interface displaying the collection entrance in response to a trigger operation performed on the collection entrance.

In some embodiments, the terminal displays the resource interface on the list interface displaying the collection entrance in response to a trigger operation performed on the collection entrance. In other embodiments, the terminal displays the resource interface on the live-streaming interface displaying the collection entrance in response to a trigger operation performed on the collection entrance.

In some embodiments, the collection entrance is a control displayed on the interface. Accordingly, the terminal displays the resource interface in response to a trigger operation performed on the control.

In some embodiments, the terminal pops up the resource interface of an account logged on by the terminal in the list interface.

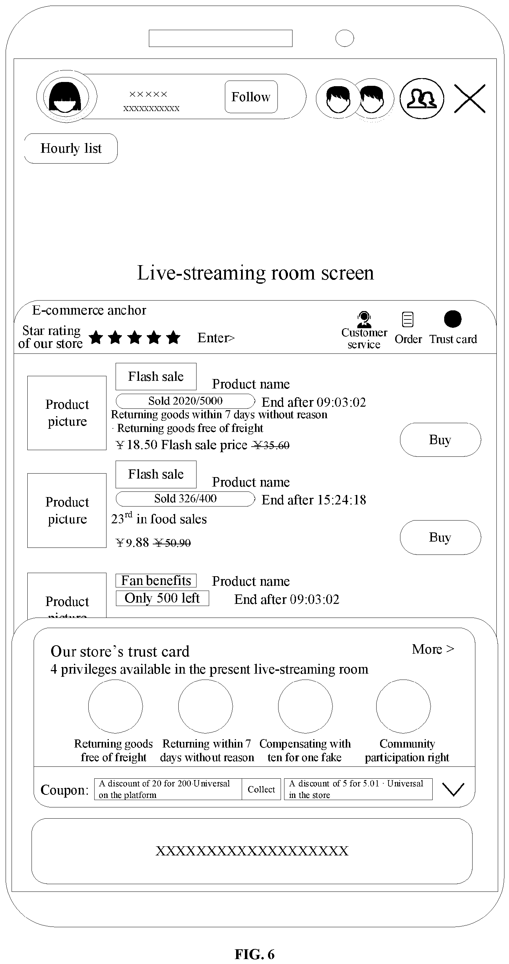

Illustratively, FIG. 6 is a schematic diagram of a resource interface according to an exemplary embodiment. Referring to FIG. 6, the multimedia interface is the live-streaming interface and the data resource is the trust card as an example, and the resource interface can be a "our store's trust card" interface as shown in FIG. 6. In the "our store's trust card" interface, at least one data resource provided by the live-streaming room is displayed, such as the right of Returning goods free of freight, the right of Returning goods within 7 days without reason, and the right of compensating with ten authentic pieces of goods for one counterfeit piece of goods, and so on.

In some embodiments, the resource interface further includes at least one reward collection control configured for triggering collection a corresponding reward. Accordingly, taking any of the at least one reward collection control as an example, in response to a trigger operation performed on the reward collection control, the terminal determines a reward corresponding to the reward collection control as a reward corresponding to the account logged on by the terminal.

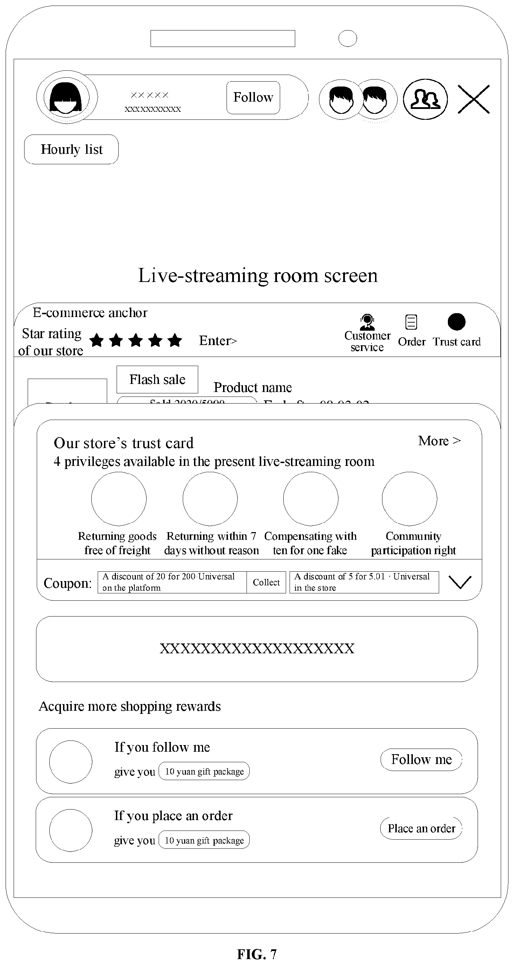

Illustratively, FIG. 7 is a schematic diagram of a resource interface according to an exemplary embodiment. Referring to FIG. 7, the multimedia interface is the live-streaming interface and the data resource is the trust card as an example, and the resource interface is a "our store's trust card" interface shown in FIG. 7. In the "our store's trust card" interface, at least one reward collection control provided by the live-streaming room is displayed, such as a "follow me" control and a "place an order" control. The "follow me" control is configured to trigger following the account of the anchor of the live-streaming room to collect a reward corresponding to this follow operation, and the " place an order" control is configured to trigger displaying of an item list interface in the live-streaming room, so as to collect a reward corresponding to an ordering operation after the terminal has logged on the account and the ordering operation has been performed. For example, the reward is a red envelope, gift package, etc.

In some embodiments, in the case that uncollected reward resource of the account logged on by the terminal is present, the terminal displays the at least one reward collection control in the resource interface when displaying the resource interface of the account logged on by the terminal. In some embodiments, in the case that uncollected reward resource of the account logged on by the terminal is present, the terminal displays the resource interface of the account logged on by the terminal according to a first height. In some embodiments, in response to the absence of uncollected reward resource of the account logged on by the terminal, the terminal does not display the at least one reward collection control in the resource interface when displaying the resource interface of the account logged on by the terminal. In some embodiments, in the case that uncollected reward resource of the account logged on by the terminal is absent, the terminal displays the resource interface of the account logged on by the terminal according to a second height. The second height is less than the first height. Referring to FIG. 6 and FIG. 7, in the case that a reward collection control is displayed on the resource interface, the resource interface is displayed with at a higher height; and in the case that no reward collection control is displayed on the resource interface, the resource interface is displayed at a lower height. In this way, the resource interface can be displayed more flexibly.

In some embodiments, the resource interface further includes at least one coupon collection control configured to trigger collecting a corresponding coupon. Accordingly, taking any control of the at least one coupon collection control as an example, in response to a trigger operation performed on the coupon collection control, the terminal determines a coupon corresponding to the coupon collection control as a coupon corresponding to the account logged on by the terminal.

For example, referring to FIG. 6, in the "our store's trust card" interface, at least one coupon collection control provided by the live-streaming room is displayed, such as a "a discount of 20 for 200" control, a "a discount of 5 for 5.01" control.

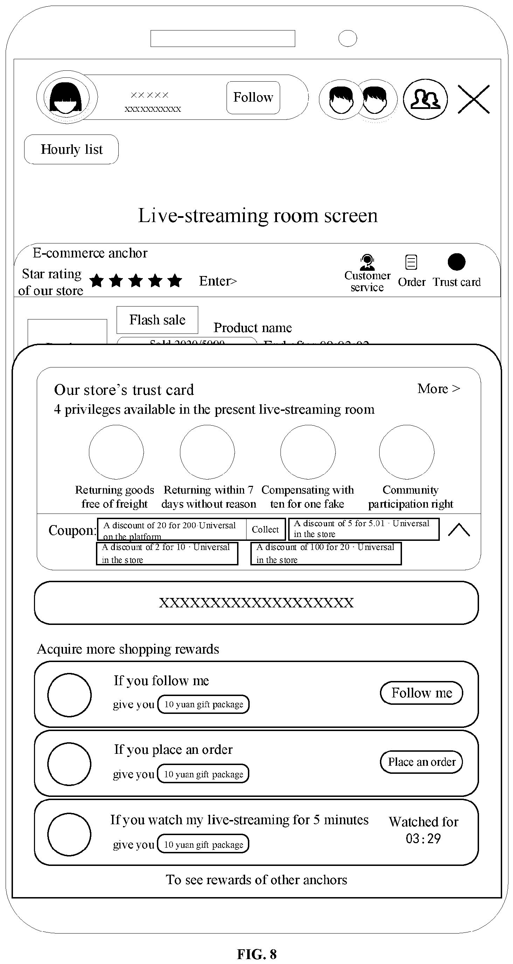

In some embodiments, the terminal displays the at least one coupon collection control in the form of folding display on the resource interface. Referring to FIG. 6, in the "our store's trust card" interface shown in FIG. 6, the at least one coupon collection control is displayed in the form of folding display. In some embodiments, in response to an unfolding operation performed on the at least one coupon collection control, the terminal displays the at least one coupon collection control in the form of unfolded. In some embodiments, in response to a trigger operation performed on a coupon unfolding control, the terminal displays the at least one coupon collection control in the form of unfolded. For example, FIG. 8 is a schematic diagram of a resource interface according to an exemplary embodiment. Referring to FIG. 8, in a "our store's trust card" interface shown in FIG. 8, the at least one coupon collection control is displayed in the form of unfolded. The coupon unfolding control is a "v" control shown in FIG. 6.

The above process is a process of displaying the resource interface based on displaying the list interface. In this way, by displaying the list interface and the resource interface associatively, the user can view the list interface while viewing the resource interface, which facilitates the user's subsequent ordering process and attracts more users to purchase items in the live-streaming room. In other embodiments, in response to a trigger operation performed on the collection entrance, the terminal does not need to display the item list interface, but displays the resource interface of the account logged on by the terminal.

In some embodiments, after the terminal displays the collection entrance, the method further including stopping displaying the collection entrance in the following cases.

(305A) In some embodiments, in response to that the collection entrance has been displayed for a second time duration, the terminal stops displaying the collection entrance. The second time duration is a preset fixed time duration, such as 5s, and having been displayed a second time duration refers to a duration of displaying of the collection entrance is greater than or equal to the second time duration. In this way, the collection entrance disappears after displaying for a time duration of 5s, so as to avoid blocking the screen and affecting the user's viewing experience.

(305B) In some embodiments, the terminal stops displaying the collection entrance in the case that the account has collected the data resource. In this way, after the data resource has been collected, the collection entrance is no longer displayed, so as to avoid blocking the screen and affecting the user's viewing experience.

The above (305B) is a process in which the terminal first displays the collection entrance, and then stops displaying the collection entrance when the account has already collected the data resource. In some other embodiments, the terminal stops displaying the collection entrance in response to an access operation performed on the multimedia interface and the data resource has been collected by the account.

(305C) In some embodiments, the terminal stops displaying the collection entrance in response to a closing operation performed on the collection entrance.

In some embodiments, the terminal stops displaying the collection entrance in response to a trigger operation performed on a closing control in the collection entrance. In other embodiments, the terminal stops displaying the collection entrance in response to a trigger operation performed on any blank area on the multimedia interface. In this embodiment, two ways for closing the collection entrance are provided, so that the user can flexibly control a display situation of the collection entrance, thereby improving the human-computer interaction efficiency.

In some embodiments, the terminal can also have other display manners before displaying the resource interface of the account logged on by the terminal, see step (305D) to step (305E):

(305D) In some embodiments, the terminal displays a target animation in response to a trigger operation performed on the collection entrance, and the target animation is configured for prompting to collect the data resource.

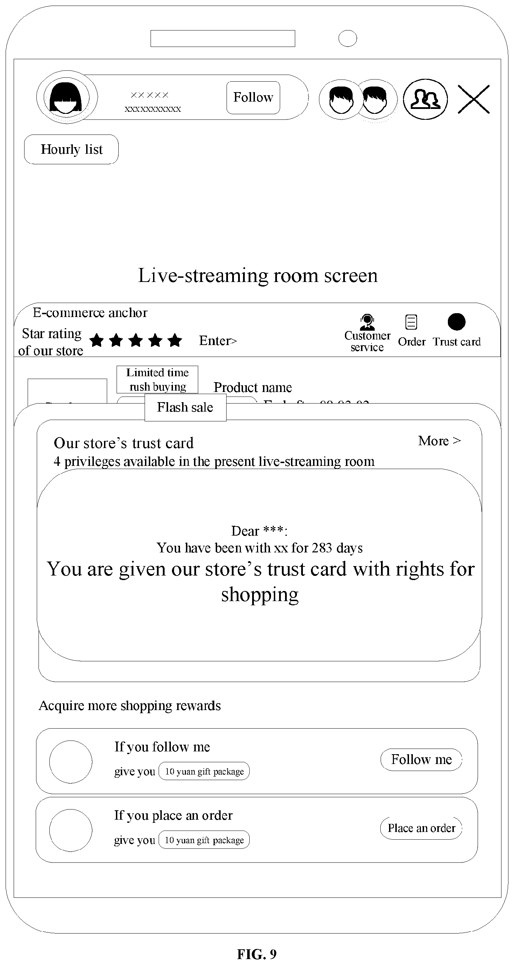

In some embodiments, the terminal displays the target animation in the list interface. In other embodiments, the terminal displays the target animation in the resource interface. For example, FIG. 9 is a schematic diagram of a resource interface according to an exemplary embodiment. Referring to FIG. 9, the target animation is displayed in a "our store's trust card" interface shown in FIG. 9. In this way, the amount of information displayed in the live-streaming room is increased, and the displaying form of animation can increase the user's attention to the data resources and promote the user to perform subsequent ordering processes.

(305E) In some embodiments, in to the case that the target animation has been displayed for a third time duration, the terminal stops displaying the target animation and executes a step of displaying the resource interface of the account logged on by the terminal. The third time duration is a preset fixed time duration, such as 3s, and having been displayed for a third time duration refers to that a duration of displaying the target animation is greater than or equal to the third time duration. In this way, it is possible to avoid blocking the live-streaming screen and affecting the user's viewing experience.

In some embodiments, the terminal can further perform the following steps based on the resource interface.

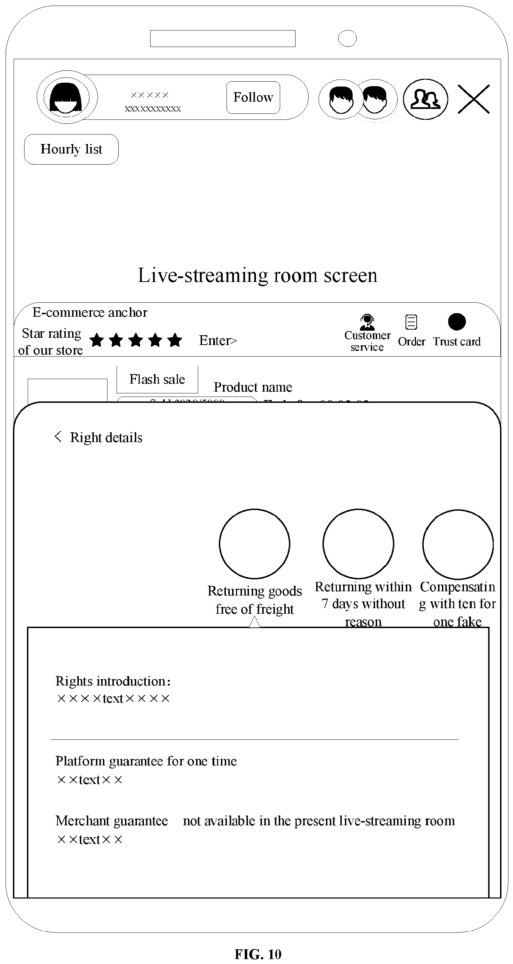

In some embodiments, for any data resource on the resource interface, in response to a viewing operation performed on the data resource, the terminal displays a resource introduction interface of the data resource for introducing associated information corresponding to the data resource. For example, FIG. 10 is a schematic diagram of a resource introduction interface according to an exemplary embodiment. Referring to FIG. 10, the resource introduction interface is a "right detail interface" shown in FIG. 10. For the right of Returning goods free of freight, for example, the terminal displays the resource introduction interface of the right of Returning goods free of freight in response to a viewing operation performed on the right of Returning goods free of freight.

In some embodiments, for any data resource on the resource interface, in response to a viewing operation performed on the data resource, the terminal displays a resource introduction interface of the data resource, in which the data resource and introduction information thereof are displayed in the form of centered display. Referring to FIG. 10, the right of Returning goods free of freight and introduction information thereof are displayed in the form of centered display. In some embodiments, the resource introduction interface is further configured for displaying additional at least one data resource other than the data resource, such as the right of Returning goods within 7 days without reason and the right of compensating with ten authentic pieces of goods for one counterfeit piece of goods shown in FIG. 10. In some embodiments, in response to a sliding operation based on the data resources displayed on the resource introduction interface, the terminal displays data resources corresponding to the sliding operation and corresponding introduction information in the form of centered display.

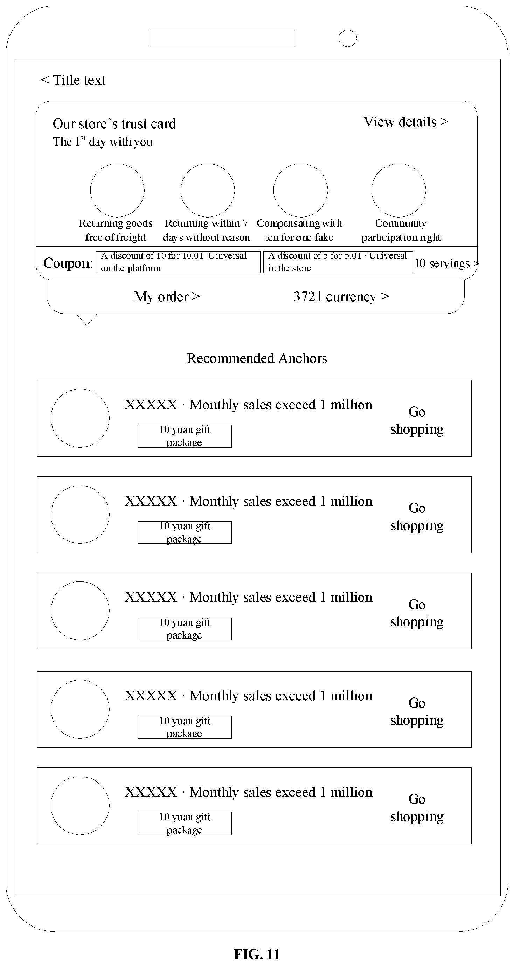

In some embodiments, in response to a trigger operation performed on a resource detail control, the terminal displays a resource detail interface including multiple data resources in at least one live-streaming room corresponding to the account. Referring to FIG. 6, the resource detail control is a "more" control shown in FIG. 6. Illustratively, FIG. 11 is a schematic diagram of a resource detail interface according to an exemplary embodiment.

In 306, the data resource corresponding to the account logged on by the terminal is displayed by the terminal in the resource interface.

In the above embodiment, the data resource is displayed in the case that the terminal is in a log-on state, so that the data resource corresponding to the account is displayed based on the account logged on by the terminal. In embodiments of the present disclosure, there are multiple data resources included in the resource interface.

In some embodiments, the terminal displays the data resource corresponding to the account logged on by the terminal in an operable state in the resource interface.

The above step 306 is a process of displaying the data resources corresponding to the account logged on by the terminal. In some embodiments, the terminal further displays data resources that do not correspond to the account logged on by the terminal in the resource interface.

In some embodiments, the terminal displays data resources that do not correspond to the account in the resource interface in an inoperable state. In some embodiments, the terminal displays data resources that do not correspond to the account in the resource interface in a grayed-out state. In this embodiment, by displaying data resources that do not correspond to the account in an inoperable state, it is possible to avoid a display error due to a misoperation, and it becomes easy for the user to know whether the data resource corresponds to the account based on a state of the data resource.

In other embodiments, the terminal displays a data resource that does not correspond to the account in the resource interface in an operable state. In this embodiment, the resource data corresponding to the account and the data source that does not corresponding to the account are both displayed in an operable state, so that the user can performed a trigger operation on any data resource to view detail information thereof.

Embodiments of the present disclosure does not limit a setting manner of the operating state of the data resource.

In 307, the target data resource is displayed in the resource interface in a target state by the terminal, and the target data resource is the collected data resource.

The target data resource is the data resource acquired by the account logged on by the terminal. In some embodiments, the target data resource is one, two or more of the data resources corresponding to the account. In some embodiments, the target state is any one of a lighted state, a blinking state, a shaking state, and the like.

In some embodiments, the terminal displays the target data resource in the data resources included in the resource interface in the resource interface in a lighted state. In this way, the target data resource is displayed in the form of lighted display, so that the user can determine the collected data resource, thereby guiding the user to perform subsequent operations based on the collected data resource.

The above process is a process of acquiring data resources corresponding to the account logged on by the terminal, and then triggering displaying. In some embodiments, the multimedia interface is a live-streaming interface as an example, the server also acquires data resources provided in the live-streaming room, and transmit the collected data resources to the terminal to trigger the terminal to display the data resources. In this way, by providing the account with data resources provided in the live-streaming room, users can understand the interaction rights and benefits of the merchant or the anchor, thereby enhancing interaction power (such as ordering power). In some embodiments, the server also acquires data resources provided by a platform associated with the live-streaming application, and transmit the collected data resources to the terminal to trigger the terminal to display the data resources. In this way, by providing the account with data resources provided by the platform, users can understand the platform's interactive rights and benefits, thereby enhancing interaction power.

The technical solutions according to the embodiments of the present disclosure can improve the human-machine interaction efficiency and attract the user to interact based on the interfaces, thereby improving the user conversion rate.

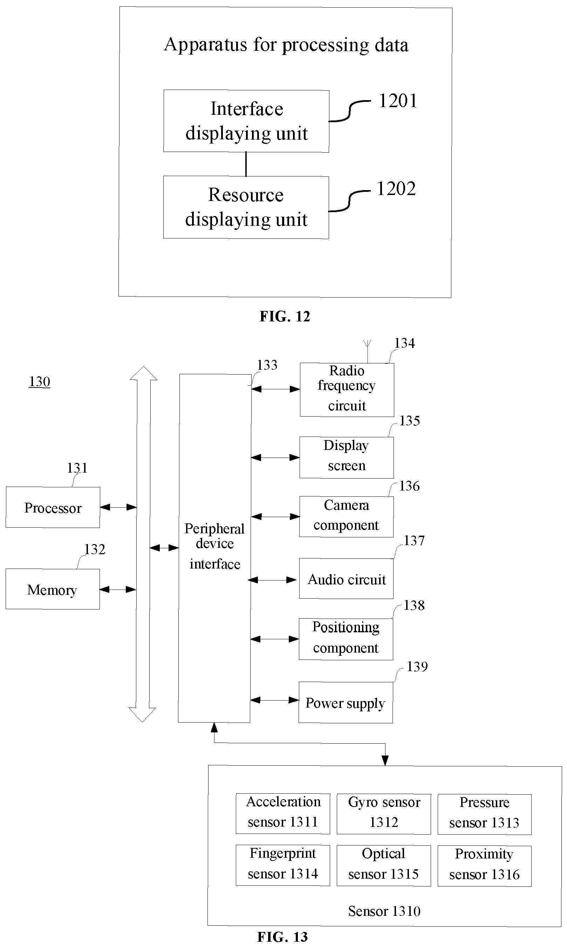

FIG. 12 is a block diagram of an apparatus for displaying data according to an embodiment of the present disclosure. Referring to FIG. 12, the apparatus includes an interface displaying unit 1201 and a resource displaying unit 1202.

The interface displaying unit 1201 is configured to display a resource interface on an interface displaying a collection entrance of a data resource in response to a trigger operation performed on the collection entrance; and
the resource displaying unit 1202 is configured to display a target data resource in a target state on the resource interface, the target data resource being the collected data resource.

In some embodiments, the interface displaying unit 1201 is configured to:
display the resource interface on a list interface displaying the collection entrance in response to the trigger operation performed on the collection entrance, the list interface including at least one object.

In some embodiments, the collection entrance is a control displayed on the interface; and
the interface displaying unit 1201 is configured to:
display the resource interface in response to a trigger operation performed on the control.

In some embodiments, the apparatus further includes an entrance displaying unit configured to display the collection entrance in at least one of the following conditions:
in response to an access operation performed on a multimedia interface;
in response to the access operation performed on the multimedia interface, and in response to staying on the multimedia interface for a first time duration; and
in response to an access operation performed on the multimedia interface during a target time period.

In some embodiments, the entrance displaying unit is configured to:
display the collection entrance in the form of an animation.

In some embodiments, the resource displaying unit 1202 is further configured to:
display a data resource corresponding to an account logged on by a terminal in the case that the terminal is in a log-on state.

In some embodiments, the resource displaying unit 1202 is further configured to stop displaying the collection entrance in response to at least one of: that a display time duration of the collection entrance exceeds a second time duration; that the data resource is collected; and, a closing operation of the collection entrance

It needs to be noted that for the apparatus for displaying data provided in the foregoing embodiments, during data displaying, the division of the foregoing functional modules is only an example for description. During actual application, the foregoing functions can be allocated to different functional modules as required. That is, the internal structure of the apparatus is divided into different functional modules, to complete all or some functions described above. In addition, the apparatus for displaying data provided in the foregoing embodiments and the embodiments of the method for displaying data belong to the same concept. For a specific implementation process of the apparatus for displaying data, reference can be made to the method embodiments. Details are not described herein again.

The embodiments of the present disclosure provide a computer device including one or more processors and a memory for storing program codes executable by the one or more processors, wherein the one or more processors is/are configured to executed the program codes to realize any of the above method for displaying data.

The computer device mentioned in the embodiments of the present disclosure can be provided as a terminal. FIG. 13 is a block diagram of a terminal 1300 according to an embodiment of the present disclosure. The terminal 1300 is a smart mobile phone, a tablet computer, a Moving Picture Experts Group Audio Layer III (MP3) player, a Moving Picture Experts Group Audio Layer IV (MP4) player, a laptop or desk computer. In some embodiments, the terminal 1300 is also be called User Equipment (UE), a portable terminal, a laptop terminal, a desk terminal, etc.

Usually, the terminal 1300 includes a processor 1301 and a memory 1302.

The processor 1301 includes one or more processing cores, such as a 4-core processor and an 8-core processor. In some embodiments, the processor 1301 is formed by at least one hardware of a digital signal processing (DSP), a field-programmable gate array (FPGA), and a programmable logic array (PLA). In some embodiments, the processor 1301 includes a main processor and a coprocessor. The main processor is a processor for processing the data in an awake state, and is also called a central processing unit (CPU). The coprocessor is a low-power-consumption processor for processing the data in a standby state. In some embodiments, the processor 1301 is be integrated with a graphics processing unit (GPU), which is configured to render and draw the content that needs to be displayed by a display screen. In some embodiments, the processor 1301 also includes an artificial intelligence (AI) processor configured to process computational operations related to machine learning.

The memory 1302 includes one or more computer-readable storage mediums, which can be non-transitory. In some embodiments, the memory 1302 also includes a high-speed random-access memory, as well as a non-volatile memory, such as one or more disk storage devices and flash storage devices. In some embodiments, the non-transitory computer-readable storage medium in the memory 1302 is configured to store at least one program code. The at least one program code is configured to be executed by the processor 1301 of the terminal to implement the method for displaying data according to the embodiments of the present disclosure.

In some embodiments, the terminal 1300 also includes a peripheral device interface 1303 and at least one peripheral device. In some embodiments, the processor 1301, the memory 1302, and the peripheral device interface 1303 can be connected by a bus or a signal line. Each peripheral device is connected to the peripheral device interface 1303 by a bus, a signal line or a circuit board. Specifically, the peripheral device includes at least one of a radio frequency circuit 1304, a touch display screen 1305, a camera component 1306, an audio circuit 1307, a positioning component 1308 and a power source 1309.

The peripheral device interface 1303 is configured to connect at least one peripheral device associated with an input/output (I/O) to the processor 1301 and the memory 1302. In some embodiments, the processor 1301, the memory 1302 and the peripheral device interface 1303 are integrated on the same chip or circuit board. In some embodiments, any one or two of the processor 1301, the memory 1302 and the peripheral device interface 1303 are implemented on a separate chip or circuit board, which is not limited in the embodiments of the present disclosure.

The radio frequency circuit 1304 is configured to receive and transmit a radio frequency (RF) signal, which is also referred to as an electromagnetic signal. The radio frequency circuit 1304 communicates with a communication network and other communication devices via the electromagnetic signal. The radio frequency circuit 1304 converts the electrical signal into the electromagnetic signal for transmission, or converts the received electromagnetic signal into the electrical signal. In some embodiments, the radio frequency circuit 1304 includes an antenna system, an RF transceiver, one or more amplifiers, a tuner, an oscillator, a digital signal processor, a codec chipset, a subscriber identity module card, and the like. In some embodiments, the radio frequency circuit 1304 communicates with other terminals via at least one wireless communication protocol. The wireless communication protocol includes, but not limited to, the World Wide Web, a metropolitan area network, an intranet, various generations of mobile communication networks (2G, 3G, 4G, and 5G), a wireless local area network, and/or a wireless fidelity (WiFi) network. In some embodiments, the RF circuit 1304 includes near field communication (NFC) related circuits, which is not limited in the present disclosure.

The display screen 1305 is configured to display a user interface (UI). In some embodiments, the UI includes graphics, text, icons, videos, and any combination thereof. In the case that the display screen 1305 is a touch display screen, the display screen 1305 also has the capacity to acquire touch signals on or over the surface of the display screen 1305. In some embodiments, the touch signal is input into the processor 1301 as a control signal for processing. At this time, the display screen 1305 is also configured to provide virtual buttons and/or virtual keyboards, which are also referred to as soft buttons and/or soft keyboards. In some embodiments, one display screen 1305 is disposed on the front panel of the terminal 1300. In some embodiments, at least two display screens 1305 are disposed respectively on different surfaces of the terminal 1300 or in a folded design. In further embodiments, the display screen 1305 is a flexible display screen disposed on the curved or folded surface of the terminal 1300. Even the display screen 1305 has an irregular shape other than a rectangle; that is, the display screen 1305 is an irregular-shaped screen. In some embodiments, the display screen 1305 is made as a liquid crystal display (LCD) or an organic light-emitting diode (OLED) display screen.

The camera component 1306 is configured to capture images or videos. In some embodiments, the camera component 1306 includes a front camera and a rear camera. Usually, the front camera is placed on the front panel of the terminal, and the rear camera is placed on the back of the terminal. In some embodiments, at least two rear cameras are disposed, and are at least one of a main camera, a depth-of-field camera, a wide-angle camera, and a telephoto camera respectively, so as to realize a background blurring function achieved by fusion of the main camera and the depth-of-field camera, panoramic shooting and virtual reality (VR) shooting functions achieved by fusion of the main camera and the wide-angle camera or other fusion shooting functions. In some embodiments, the camera component 1306 also includes a flashlight. In some embodiments, the flashlight is a mono-color temperature flashlight or a two-color temperature flashlight. The two-color temperature flash is a combination of a warm flashlight and a cold flashlight and can be used for light compensation at different color temperatures.

The audio circuit 1307 includes a microphone and a speaker. The microphone is configured to collect sound waves of users and environments, and convert the sound waves into electrical signals which are input into the processor 1301 for processing, or input into the RF circuit 1304 for voice communication. In some embodiments, for the purpose of stereo acquisition or noise reduction, there is a plurality of microphones respectively disposed at different locations of the terminal 1300. In some embodiments, the microphone is an array microphone or an omnidirectional acquisition microphone. The speaker is then configured to convert the electrical signals from the processor 1301 or the radio frequency circuit 1304 into the sound waves. In some embodiments, the speaker is a conventional film speaker or a piezoelectric ceramic speaker. When the speaker is the piezoelectric ceramic speaker, the electrical signal can be converted into not only human-audible sound waves but also the sound waves which are inaudible to humans for the purpose of ranging and the like. In some embodiments, the audio circuit 1307 includes a headphone jack.

The positioning component 1308 is configured to locate the current geographic location of the terminal 1300 to implement navigation or location-based service (LBS). In some embodiments, the positioning component 1308 is a positioning component based on the American global positioning system (GPS), the Chinese Beidou system, the Russian GRONASS system or the Galileo system of the European Union.

The power source 1309 is configured to power up various components in the terminal 1300. In some embodiments, the power source 1309 is alternating current, direct current, a disposable battery, or a rechargeable battery. In the case that the power source 1309 includes the rechargeable battery, the rechargeable battery is a wired rechargeable battery or a wireless rechargeable battery. The wired rechargeable battery is a battery charged by a cable line, and wireless rechargeable battery is charged by a wireless coil. The rechargeable battery also supports the fast charging technology.

In some embodiments, the terminal 1300 also includes one or more sensors 1310. The one or more sensors 1310 include, but not limited to, an acceleration sensor 1311, a gyro sensor 1312, a pressure sensor 1313, a fingerprint sensor 1314, an optical sensor 1315 and a proximity sensor 1316.

The acceleration sensor 1311 detects magnitudes of accelerations on three coordinate axes of a coordinate system established by the terminal 1300. For example, the acceleration sensor 1311 is configured to detect components of a gravitational acceleration on the three coordinate axes. The processor 1301 controls the touch display screen 1305 to display a user interface in a landscape view or a portrait view according to a gravity acceleration signal collected by the acceleration sensor 1311. The acceleration sensor 1311 is also configured to collect motion data of a game or a user.

The gyro sensor 1312 is used to detect a body direction and a rotation angle of the terminal 1300. In some embodiments, and the gyro sensor 1312 cooperates with the acceleration sensor 1311 to collect a 3D motion of the user on the terminal 1300. Based on the data collected by the gyro sensor 1312, the processor 1301 serves the following functions: motion sensing (such as changing the UI according to a user's tilt operation), image stabilization during shooting, game control and inertial navigation.

The pressure sensor 1313 is disposed on a side frame of the terminal 1300 and/or a lower layer of the touch display screen 1305. In the case that the pressure sensor 1313 is disposed on the side frame of the terminal 1300, a user's holding signal to the terminal 1300 is detected. The processor 1301 can perform left-right hand recognition or quick operation according to the holding signal collected by the pressure sensor 1313. In the case that the pressure sensor 1313 is disposed on the lower layer of the touch display screen 1305, the processor 1301 controls an operable control on the UI according to a user's pressure operation performed on the touch display screen 1305. The operable control includes at least one of a button control, a scroll bar control, an icon control and a menu control.

The fingerprint sensor 1314 is configured to collect a user's fingerprint. The processor 1301 identifies the user's identity based on the fingerprint collected by the fingerprint sensor 1314, or the fingerprint sensor 1314 identifies the user's identity based on the collected fingerprint. In the case that the user's identity is identified as trusted, the processor 1301 authorizes the user to perform related sensitive operations, such as unlocking the screen, viewing encrypted information, downloading software, paying, and changing settings. In some embodiments, the fingerprint sensor 1314 is provided on the front, back, or side of the terminal 1300. In the case that the terminal 1300 is provided with a physical button or a manufacturer's Logo, the fingerprint sensor 1314 is integrated with the physical button or the manufacturer's Logo.

The optical sensor 1315 is configured to collect ambient light intensity. In some embodiment, the processor 1301 controls the display brightness of the touch display screen 1305 according to the ambient light intensity collected by the optical sensor 1315. Specifically, in the case that the ambient light intensity is high, the display brightness of the touch display screen 1305 is increased; and in the case that the ambient light intensity is low, the display brightness of the touch display screen 1305 is decreased. In other embodiments, the processor 1301 also dynamically adjusts shooting parameters of the camera component 1306 according to the ambient light intensity collected by the optical sensor 1315.

The proximity sensor 1316, also referred to as a distance sensor, is usually disposed on the front panel of the terminal 1300. The proximity sensor 1316 is configured to capture a distance between the user and a front surface of the terminal 1300. In some embodiment, in the case that the proximity sensor 1316 detects that the distance between the user and the front surface of the terminal 1300 becomes gradually smaller, the processor 1301 controls the touch display screen 1305 to switch from a screen-on state to a screen-off state. In the case that it is detected that the distance between the user and the front surface of the terminal 1300 gradually increases, the processor 1301 controls the touch display screen 1305 to switch from the screen-off state to the screen-on state.

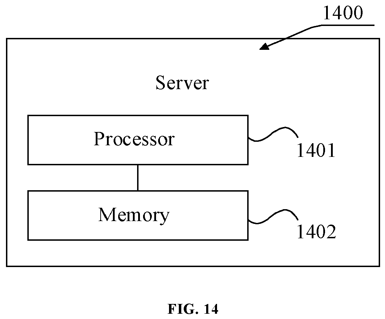

The computer device mentioned in the embodiments of the present disclosure can be provided as a server. FIG. 14 is a block diagram of a server according to an embodiment of the present disclosure. Significant differences can be generated when the server 1400 has different configurations or performances. The server 1400 includes one or more processors (CPU) 701 and one or more memories 702 stored with at least one piece of program code. The at least one piece of program code, when loaded and executed by the one or more processors 1401, cause the one or more processors 1401 to implement the method for displaying data according to the foregoing method embodiments. Of course, in some embodiments, the server 1400 further includes components such as a wired or wireless network interface, a keyboard, and an input/output interface for input and output, and the server 1400 further includes other components for implementing device functions, which is not repeated here.

In some embodiments, there is also provided a computer-readable storage medium including at least one instruction, such as a memory 1402 including at least one instruction. The at least one instruction can be executed by the processor in the server 1400 to perform the method for displaying data according to the above embodiments. In some embodiments, the above computer-readable storage medium is a read-only memory (ROM), a random-access memory (RAM), a compact disc ROM (CD-ROM), a magnetic tape, a floppy disc, an optical data storage device or the like.

In some embodiment, at least one instruction stored in the non-transitory computer-readable storage medium can be executed by a processor of an electronic device, so as to enable the electronic device to perform the method for displaying data according to any of the above embodiments.

In some embodiments, there is also provided a computer program product including a computer program, which can be executed by a processor of an electronic device, so as to enable the electronic device to perform the method for displaying data according to any of the above embodiments.

In some embodiments, the computer program involved in the embodiments of the present disclosure can be deployed in a computer device, or can be executed by a plurality of computer devices located at the same place, or can be executed by a plurality of computer devices located at different places and connected by a communication network. The plurality of computer devices located at the different places and connected by the communication network can form a blockchain system.

All the embodiments of the present disclosure can be implemented independently or in combination with other embodiments, all of which are considered to be within the protection scope claimed by the present disclosure.

## Claims

1. A method for displaying data, **characterized by** comprising:
displaying (201; 305) a resource interface on an interface displaying a collection entrance of a data resource in response to a trigger operation performed on the collection entrance, the collection entrance comprising a user interface component configured to be triggered; and
displaying (202; 307) a target data resource in a target state on the resource interface, the target data resource being a collected data resource.

2. The method for displaying data according to claim 1, wherein displaying (201; 305) the resource interface on the interface displaying the collection entrance in response to the trigger operation performed on the collection entrance comprises:
displaying the resource interface on a list interface displaying the collection entrance in response to the trigger operation performed on the collection entrance, the list interface comprising at least one object arranged in a list.

3. The method for displaying data according to claim 1 or 2, wherein the collection entrance is a control displayed on the interface; and
displaying (201; 305) the resource interface in response to the trigger operation performed on the collection entrance comprises:
displaying the resource interface in response to the trigger operation performed on the control.

4. The method for displaying data according to any of claims 1 to 3, further comprising displaying the collection entrance in response to at least one of:
an access operation performed on a multimedia interface;
the access operation performed on the multimedia interface, and staying on the multimedia interface for a first time duration; and
an access operation performed on the multimedia interface during a target time period.

5. The method for displaying data according to claim 4, further comprising:
displaying the collection entrance in a form of an animation.

6. The method for displaying data according to any of claims 1 to 5, further comprising:
displaying a data resource corresponding to an account logged on by a terminal in the case that the terminal is in a log-on state.

7. The method for displaying data according to any of claims 1 to 6, further comprising stopping displaying the collection entrance in response to at least one of:
that a display time duration of the collection entrance exceeds a second time duration;
that the data resource is collected; and
a closing operation of the collection entrance.

8. An apparatus for displaying data, **characterized by** comprising:
an interface displaying unit (1201) configured to display a resource interface on an interface displaying a preset resource entrance in response to a trigger operation performed on the preset resource entrance, the collection entrance comprising a user interface component configured to be triggered; and
a resource displaying unit (1202) configured to display a target data resource in a target state on the resource interface, the target data resource being a collected data resource.

9. The apparatus for displaying data according to claim 8, wherein the interface displaying unit (1201) is configured to:
display the resource interface on a list interface displaying the collection entrance in response to the trigger operation performed on the collection entrance, the list interface comprising at least one object arranged in a list.

10. The apparatus for displaying data according to claim 8 or 9, wherein the collection entrance is a control displayed on the interface; and
the interface displaying unit (1201) is configured to:
display the resource interface in response to the trigger operation performed on the control.

11. The apparatus for displaying data according to any of claims 8 to 10, further comprising an entrance displaying unit, wherein the entrance displaying unit is configured to display the collection entrance in response to at least one of:
an access operation performed on a multimedia interface;
the access operation performed on the multimedia interface, and staying on the multimedia interface for a first time duration; and
an access operation performed on the multimedia interface during a target time period.

12. The apparatus for displaying data according to claim 11, the entrance displaying unit is configured to:
display the collection entrance in a form of an animation.

13. The apparatus for displaying data according to any of claims 8 to 12, wherein the resource displaying unit (1202) is further configured to:
display a data resource corresponding to an account logged on by a terminal in the case that the terminal is in a log-on state.

14. The apparatus for displaying data according to any of claims 8 to 13, further comprising an entrance displaying unit, wherein the entrance displaying unit is configured to stop displaying the collection entrance in response to at least one of:
that a display time duration of the collection entrance exceeds a second time duration;
that the data resource is collected; and
a closing operation of the collection entrance.

15. A non-transitory computer-readable storage medium, **characterized in that** when program codes in the non-transitory computer-readable storage medium are executed by a processor of a computer device, the computer device is enabled to perform the method for displaying data according to any of claims 1 to 7.
